# EUROPÄISCHE PATENTSCHRIFT

(11) **EP 0 638 609 B1**
(45) Veröffentlichungstag und Bekanntmachung des Hinweises auf die Patenterteilung: **21.03.2001**
(21) Anmeldenummer: 94111743.4
(22) Anmeldetag: 28.07.1994
(51) Int. Cl.: C08L 3/06, C08K 5/092

(54) **Bioabbaubare, thermoplastisch verformbare Materialien aus Stärkeestern**
Biodegradable thermoformable materials made of starch esters
Matériaux thermoformables biodégradables dérivés d'esters d'amidon

(30) Priorität: 04.08.1993 DE 4326118; 28.05.1994 DE 4418678; 12.07.1994 DE 4424415
(43) Veröffentlichungstag der Anmeldung: 15.02.1995
(73) Patentinhaber: Buna Sow Leuna Olefinverbund GmbH, 06258 Schkopau (DE)
(72) Erfinder: Rapthel, Inno, Dr., D-06124 Halle (DE); Kakuschke, Rolf, Dr., D-06126 Halle (DE); Runge, Jürgen, Dr., D-06120 Halle (DE); Reichwald, Kerstin, D-06114 Halle (DE); Herrmann, Cornelia, Dr., D-06124 Halle (DE)

(56) Entgegenhaltungen:
- EP-A- 0 519 367
- EP-A- 0 545 278
- WO-A-92/16583
- WO-A-92/19675
- WO-A-94/07953
- MAKROMOLEKULARE CHEMIE, RAPID COMMUNICATIONS, Bd. 13, 1992, BASEL CH, Seiten 179-183, XP002007987 YOSHIHARU KUMAGAI ET AL.: "Physical properties and biodegradability of blends of isotactic and atactic poly(3-hydroxybutyrate)"

## Beschreibung

Die Erfindung bezieht sich auf thermoplastisch verformbare Materialien in Form von Granulaten, Schuppen, Formkörpern und Extrudaten, bestehend im wesentlichen aus Stärkeestern, und weiteren biologisch verträglichen Zusätzen.

Ester nativer Stärken sind seit langem bekannt, wobei vorrangig niedrigsubstituierte Ester, vor allem der Essigsäure, praktische Bedeutung erlangt haben. Anwendungsfelder sind besonders die Nahrungsmittelverpackungs- und Papierindustrie.

Für höhersubstituierte Ester, deren Verwendungszweck vorrangig thermoplastischer Art sein sollte, sind ebenfalls Herstellungsmöglichkeiten bekannt. Sie erlangen jedoch nie die praktische Bedeutung wie entsprechende Celluloseester.

Ursache hierfür sind ein höherer Schmelzbereich, geringere Festigkeit sowie Brüchigkeit der Produkte.

Mit größer werdenden Umweltproblemen in neuerer Zeit wird Stärke und ihren Derivaten auch für thermoplastische Anwendungen mehr Interesse entgegengebracht. Das entspricht dem verbreiteten Bestreben, das Potential der nachwachsenden Rohstoffe für den Kunststoffsektor nutzbar zu machen. Verwendung fanden bisher Produkte aus reiner Stärke, aber auch Mischungen mit herkömmlichen Polymeren, wie z. B. Polyethylen (u. a. WO 9015843) oder Ethylenvinylalkohol-Copolymere (EP 0400531, EP 0400532, WO 9102023).

Beide Varianten sind aber für den angegebenen Verwendungszweck mit entscheidenden Nachteilen behaftet. Artikel aus reiner Stärke haben eine sehr begrenzte Haltbarkeit und sind äußerst feuchtigkeitsempfindlich.

Bei Blends mit herkömmlichen Polymeren ist die biologische Abbaubarkeit, zumindest teilweise, in Frage gestellt.

Unter den genannten Aspekten wird auch zunehmend der Einsatz derivatisierter Stärke, insbesondere der Stärkeester mit höheren Substitutionsgraden, für thermoplastische Verwendungszwecke wieder interessanter. Dabei sollte beachtet werden, daß die zur Derivatisierung eingesetzten Reaktionspartner die biologische Abbaubarkeit der Endprodukte nicht wesentlich beeinträchtigen oder völlig verhindern dürfen. Gleiches gilt für Weichmacher, Hilfsstoffe u. ä.

Unter diesen Aspekten ist der Einsatz von Stärkeestern von Vorteil. Trotz vielfältig bekannter Varianten zur Herstellung von Stärkeacetaten mit höheren Substitutionsgraden, die sich auch ökonomisch günstig gestalten lassen, fehlen bisher Möglichkeiten, solche Stärkeacetate kostengünstig in qualitativ befriedigende Thermoplaste umzuwandeln. Es ist bekannt, daß Stärkeester mit Substitutionsgraden < 3 ausgesprochen mühsam und mit unbefriedigendem Erfolg thermoplastisch verarbeitbar sind. Mit anderen Worten: die in Frage kommenden Materialien ergeben nur schlecht fließende Schmelzen und müssen daher so hoch erhitzt werden, daß eine thermische Schädigung nicht vermieden werden kann. Die resultierenden Formkörper sind mehr oder weniger verfärbt und weisen eine hohe Sprödigkeit auf. Das gilt in besonderem Maße dann, wenn die verwendete Stärke nennenswerte Konzentrationen an Amylopektin enthält.

Ein wesentlicher Fortschritt wurde erzielt, als es gelungen, war, mit geeigneten Weichmachern Stärkeacetate zu plastifizieren. Nach DE 41 14 185 werden dazu vorzugsweise Zitronensäureester, Glycerinacetat und Milchsäureethylester eingesetzt. Diese dort vorgeschlagenen Ester sind zwar biologisch abbaubar, haben als Weichmacher jedoch nur eine begrenzte zeitliche Wirkung, d. h. die Formmassen verspröden bei der Lagerung.

Die Aufgabe der Erfindung ist es, neue Stärkeester-Weichmacher-Zusammensetzungen zu entwickeln, die mit vertretbarem ökonomischem Aufwand mit allen bekannten thermoplastischen Verarbeitungsverfahren verformbar sind, ohne daß darunter die Eigenschaften der Endprodukte, insbesondere die Langzeitfestigkeit, die biologische Abbaubarkeit, die Wasserfestigkeit und die Schmelzestabilität bei der thermoplastischen Verarbeitung leiden.

Erfindungsgemäß bestehen die Modifikationen aus Blends von Stärkeestern, vorwiegend Stärkeacetat, mit einem Substitutionsgrad < 3, vorzugsweise von 1,8 - 2,6 und besonders bevorzugt von 2,2 - 2,4 und Polyalkylenglykolen (PAG) mit einer Molmasse von 200 - 2000 g/mol vorzugsweise von 200 bis 600 g/mol. Als Polyalkylenglykol werden vorwiegend Polyethylenglykol und Polypropylenglykol sowie Copolymere des Ethylenoxids und Propylenoxids mit beliebiger Zusammensetzung verwendet.

Auf diesem Wege lassen sich thermoplastisch verarbeitbare Mischungen für alle bekannten Verarbeitungsverfahren erzeugen, beispielsweise für Schmelzextrusion, Spritzguß und Tiefziehen. Dabei kann bei deutlich abgesenkten Verarbeitungstemperaturen und erhöhtem Schmelzindex gearbeitet werden, so daß eine thermische Schädigung auch in Ansätzen vermeidbar ist. Ein besonderer Vorteil der genannten Verfahrensweise ist es, daß auch native Stärken mit relativ hohen Amylopektinanteilen verarbeitet werden können.

Die entstehenden Produkte sind formstabil und sehr maßgenau, weit weniger feuchtigkeitsempfindlich als Produkte aus reiner Stärke und dabei noch vollständig biologisch abbaubar, da auch die verwendbaren Polyalkylenglykole ohne weiteres dem biologischen Abbau unterliegen.

Ein weiterer besonderer Vorteil liegt darin begründet, daß der Zusatz von Polyalkylenglykolen die Einarbeitung und die homogene Verteilung von Hilfsstoffen wie Pigmenten, Stabilisatoren, Weichmachern, Flammfestmachern, Gleitmitteln und Duftstoffen in die Stärkeester wesentlich erleichtert und befördert. Im Gegensatz zu dem Verhalten der nicht mit Polyalkylenglykolen versetzten Stärkeester behalten die genannten Hilfsstoffe ihre homogene Verteilung über unbegrenzte Zeiträume bei.

Die mechanischen Kennwerte der Blends zeigen keinen Abfall bei längerer Lagerung.

Erfindungsgemäß können 20 bis 80 % des eingesetzten Polyalkylenglykols durch eine Polyhydroxybuttersäure mit einer Molmasse von 1000 bis 10 000 g/mol, vorzugsweise 2000 bis 5000 g/mol ersetzt werden.

Ein besonderer Vorteil des teilweisen Austausches des Polyalkylenglykols durch die Polyhydroxybuttersäure ist, daß die eingesetzte Menge an wasserlöslichem Polyalkylenglykol in bedeutendem Maße durch wasserunlösliche oligomere ataktische Hydroxybuttersäure ersetzt werden, bei Beibehaltung der thermoplastischen Verarbeitbarkeit in sinnvollen Temperaturbereichen. Ein vollständiger Ersatz des Polyalkylenglykols durch die ataktische Polyhydroxybuttersäure ist in diesem Sinne nicht möglich.

Überraschenderweise wird durch den o. g. Zusatz die biologische Abbaubarkeit, gemessen am Verhalten entsprechender Proben in einer Industrierotte, gegenüber Blends, die nur aus Stärkeacetat und PEG bestehen, deutlich verbessert. Eine Verbesserung der biologischen Abbaubarkeit für Blends aus fermentativer Polyhydroxybuttersäure (in etwa in dem angegebenen Molmassebereich) ist in Kumagai; Doi, Makromol. Chem., Rapid Commun. 13, 179 - 183 (1992) beschrieben, wobei die Abbaubarkeit von ataktischer Polyhydroxybuttersäure geringer ist als die von fermentativer isotaktischer Polyhydroxybuttersäure. Der dort beobachtete Effekt beruht auf einer Störung der Kristallinität der fermentativen Polyhydroxybuttersäure, durch den ein Angriff von Enzymen erleichtert wird. Ein ähnlicher Effekt konnte im hier vorliegenden Fall nicht erwartet werden, da bereits die beschriebenen Ausgangsblends eine amorphe Struktur haben. Eine Verwendung von isotaktischer Polyhydroxybuttersäure im angegebenen Molmassebereich ist möglich, erscheint aber aufgrund zu erwartender hoher Kosten für den angegebenen Verwendungszweck nicht sinnvoll.

Erfindungsgemäß können den Modifikationen aus Blends von Stärkeestern und Polyalkylenglykolen (PAG) aliphatische gesättigte oder ungesättigte Dicarbonsäuren, und/oder Oxidicarbonsäuren und/oder Oxitricarbonsäuren mit 2 bis 10 C-Atomen zugesetzt sein.

Die Säuren können in einem Mischungsverhältnis Blend/Säure 100 zu 1 bis 1000 zu 1 enthalten sein. Bevorzugte Mischungsverhältnisse sind 100 zu 1 bis 300 zu 1. Als bevorzugte Dicarbonsäuren sind Oxalsäure, Malonsäure und Bernsteinsäure, als bevorzugte ungesättigte Dicarbonsäuren sind Fumarsäure und Maleinsäure, als eine bevorzugte oxitricarbonsäure ist nensäure und als bevorzugte oxidicarbonsäuren sind Äpfelsäure und Weinsäure vorteilhaft. Als Polyalkylenglykol werden vorwiegend Polyethylenglykol und Polypropylenglykol sowie Copolymere des Ethylenoxids und Propylenoxids mit beliebiger Zusammensetzung verwendet.

Nach der Einarbeitung der Carbonsäuren liegt die Säurezahl der fertigen Compounds zwischen 10 und 25 mg KOH/g.
Auf diesem Wege lassen sich thermoplastisch verarbeitbare Mischungen für alle bekannten Verarbeitungsverfahren erzeugen, beispielsweise für Schmelzextrusion, Spritzguß, Tiefziehen. Dabei kann bei deutlich abgesenkten. Verarbeitungstemperaturen und erhöhtem Schmelzindex gearbeitet werden, so daß eine thermische Schädigung auch in Ansätzen vermeidbar ist.

Besonders wird die Schmelzestabilisierung durch diese Zusätze verbessert. Auch die biologische Abbaubarkeit wird weiter erhöht.

Ein weiterer Vorteil der genannten Verfahrensweise ist es, daß auch native Stärken mit relativ hohen Amylopektinanteilen verarbeitet werden können.

Ein weiterer besonderer Vorteil liegt darin begründet, daß der Zusatz von Polyalkylenglykolen und der mehrbasigen Carbonsäuren die Einarbeitung und die homogene Verteilung von Hilfsstoffen wie Pigmenten, Stabilisatoren, Weichmachern, Flammfestmachern, Gleitmitteln und Duftstoffen in die Stärkeester wesentlich erleichtert und befördert. Im Gegensatz zu dem Verhalten der nicht mit Polyalkylenglykolen versetzten Stärkeester behalten die genannten Hilfsstoffe ihre homogene Verteilung über unbegrenzte Zeiträume bei. Die mechanischen Kennwerte der Blends zeigen keinen Abfall bei längerer Lagerung.

### Beispiele 1 bis 12

Jeweils 30 g eines Stärkeesters (Substitutionsgrad 2,2 -2,4) werden mit einer bestimmten Menge Polyethylenglykol in einem Plasticorder verknetet. Die jeweiligen Versuchsbedingungen und die Ergebnisse der anwendungstechnischen Prüfung sind in folgender Tabelle zusammengefaßt. Die Knetzeit betrug einheitlich 15 min, die Temperatur 150 °C.

**Tabelle 1**

| **Zusammensetzung und Schmelzindices der Beispiele 1 - 12** | | | | | |
|---|---|---|---|---|---|
| Beispiel | Stärkeart | Art des Substituenten | Polyethylenglykol | | Schmelzindex (cm³/10 min) |
| | | | Molmasse | Menge | |
| 1 | High Amylose | Acetat 100 % | 300 | 3 g | 0,18 (a) |
| 2 | " " | " " | 300 | 6 g | 3,2 (a) |
| 3 | " " | " " | 300 | 9 g | 34,9 (a) |
| 4 | " " | " " | 300 | 12 g | 77,5 (a) |
| 5 | " " | Acetat 80 % | 300 | 6 g | 7,1 (a) |
| | | β-Hydroxybutyrat 20 % | | | |
| 6 | " " | Propionat 100 % | 300 | 6 g | 37,3 (a) |
| 7 | " " | Acetat 100 % | 200 | 12 g | 40,8 (b) |
| 8 | " " | " " | 600 | 12 g | 39,8 (b) |
| 9 | " " | " " | 1000 | 12 g | 47,0 (b) |
| 10 | " " | " " | 10000 | 12 g | keine Messung/Entmischung |
| 11 | Mais | " " | 300 | 9 g | 15,6 (a) |
| 12 | High Amylose | " " | 500 | 9 g | 25,4 (c) |

| | | | | | |
|---|---|---|---|---|---|
| (a) Messung bei 170 °C, 2,16 kp | | | | | |
| (b) Messung bei 125 °C, 2,16 kp | | | | | |
| (c) Copolymeres aus Ethylen- und Propylenglykol | | | | | |

Von Beispiel 3 und 11 wurden über einen Extruder und eine Schlitzdüse mit Abzugsvorrichtung klare Folien hergestellt, für die nachfolgende anwendungstechnische Kennwerte ermittelt wurden:

**Tabelle 2**

| **Ausgewählte mechanische Kennwerte von Folien der Beispiele 3 und 11** | | |
|---|---|---|
| Kennwert | Beispiel 3 | Beispiel 11 |
| Zugfestigkeit (MPa) | 5,3 | 3,5 |
| Reißfestigkeit (MPa) | 4,8 | 3,2 |
| Reißdehnung (%) | 55,5 | 20,3 |

Aus den Proben 2, 3, 5 und 6 wurden auf einer Thermopresse bei 215 °C Platten (50 x 50 x 1 mm) hergestellt. Die Platten wurden 2 Minuten ohne Druck und anschließend bei einem Druck von 20 MPa gepreßt. Die jeweils anfallenden Folien sind tiefziehfähig.

### Beispiele 13 bis 16

Jeweils 1500 g Stärkeacetat (Substitutionsgrad 2,3) wurden über einen Zweischneckenextruder unter Zugabe von Polyalkylenglykol und einem Pigment zu einem Granulat (Durchmesser 3 mm) verarbeitet. Die Granulate zeigten bei allen verwendeten Pigmenten eine gleichmäßige Färbung. Sie wurden als Ausgangsstoff zum Spritzgießen von ISO-Stäben nach DIN 53 455 verwendet.

**Tabelle 3**

| **Zusammensetzung in den Beispielen 13 - 15** | | | |
|---|---|---|---|
| | Beispiel 13 | Beispiel 14 | Beispiel 15 |
| Stärkeart | High Amylose | High Amylose | Mais |
| Menge (g) | 1500 g | 1500 g | 1500 g |
| Polyalkylenglykol | Polyethylenglykol | Polyethylenglykol | Polyethylenglykol |
| Molmasse | 300 | 276 | 300 |
| Menge (g) | 300 | 375 | 300 |
| Pigment | TiO₂ | Moosgrün | Fe₂O₃ (rot) |
| menge (g) | 7,5 | 7,5 | 7,5 |

Beispiel 16 entspricht in der Zusammensetzung Beispiel 13, wurde jedoch 3 Monate trocken gelagert.

Die anwendungstechnische Prüfung der ISO-Stäbe ergab folgende Kennwerte:

**Tabelle 4**

| **Anwendungstechnische Kennwerte der ISO-Stäbe aus den Beispielen 13 - 16** | | | | |
|---|---|---|---|---|
| Kennwert | Beispiel 13 | Beispiel 14 | Beispiel 15 | Beispiel 16 |
| Schmelzindex (g/10 min) | 1,3 | 4,2 | 10,9 | 1,5 |
| Schlagbiegefestigkeit (kg/m² ) | 2.1 | 3.4 | 2,0 | 2,0 |
| Grenzbiegefestigkeit (N/mm² ) | 44,6 | 39,5 | 23,9 | 43,7 |
| Elastizitätsmodul (N/mm²) | 1550 | 1150 | 986,7 | 1470 |
| Zugfestigkeit (N/mm²) | 17,0 | 18,7 | 13,6 | 17,2 |
| Reißdehnung (%) | 13,7 | 15,3 | 11,7 | 13,8 |
| Kugeldruckhärte 30" (N/mm²) | 65 | 55 | 38 | 67 |

Beispiel 16 belegt, daß die erfindungsgemäßen Blends nach längerer Lagerzeit keine merklichen Qualitätsverluste aufweisen.

### Beispiele 17 - 20

In den folgenden Beispielen werden je 1000 g einer Mischung Stärkeacetat, Polyethylenglycol und ataktischer Polyhydroxybuttersäure in einem mechanischen Mischer vorgemischt und mit einem Laborextruder zu
Granulat verarbeitet. Aus den jeweiligen Granulaten wurden mittels Spritzguß ISO-Stäbe (80 mm x 10 mm x 4 mm) hergestellt. Diese ISO-Stäbe wurden zur Messung der mechanischen Kennwerte sowie zur Bestimmung der Wasserempfindlichkeit und der biologischen Abbaubarkeit verwendet.
Folgende Mischungen wurden untersucht:

**Tabelle 5**

| **Zusammensetzung der untersuchten Mischungen** | | | | |
|---|---|---|---|---|
| Bsp. | Ausgangsstärke | Substitutionsgrad des Stac | PEG (400) [Ma.-%] | s-PHB [Ma.-%] |
| 17 | High-Amylose | 2,3 | 10 | 10 (E/10) |
| 18 | Mais | 2,3 | 10 | 10 (E/11) |
| 19 | High-Amylose 1) | 2,3 | 20 | - |
| 20 | Mais 2) | 2,3 | 20 | - |

| | | | | |
|---|---|---|---|---|
| 1) im Vergleich zu Beispiel 17 | | | | |
| 2) im Vergleich zu Beispiel 18 | | | | |

Die Wirkung der erfindungsgemäßen Zumischungen auf ausgewählter Kennwerte der hergestellten ISO-Stäbchen bzw. des Granulats wird in folgender Tabelle zusammengefaßt.

**Tabelle 6**

| **Ausgewählte Kennwerte** | | | | |
|---|---|---|---|---|
| Kennwert | Bsp.17 | Bsp.18 | Bsp.19 | Bsp.20 |
| Schmelzindex [g/10 min] | 0,1 | 1,2 | 4,2 | 5,6 |
| Schlagbiegefestigkeit [kg/m²] | 4,2 | 3,0 | 5,8 | 2,0 |
| Grenzbiegefestigkeit [N/mm²] | 59,0 | 55,3 | 40,8 | 38,9 |
| Elastizitätsmodul [N/mm²] | 1675 | 1722 | 1220 | 1280 |
| Zugfestigkeit [N/mm²] | 23,3 | 13,7 | 29,5 | 17,1 |
| Kugeldruckhärte 30" [N/mm²] | 85 | 60 | 72 | 71 |
| | Schmelzindex MFI, gemessen bei 150 °C, 216 kg Belastung | | | |

In der Tabelle 7 sind die in einer industriellen Rotte festgestellten Abbauraten (Masseverlust in %) dargestellt. Dabei wurden die ISO-Stäbe 2 Wochen in einer Intensivrotte gehalten und anschließend den Bedingungen der Nachrotte ausgesetzt. Die angegebene Wochenzahl bezieht sich auf die Gesamtzahl der Wochen.

**Tabelle 7**

| **Abbauraten (Masseverlust in %) von ISO-Stäben in einer ind. Rotteanlage** | | | | | |
|---|---|---|---|---|---|
| Beispiel | Rottedauer in Wochen | | | | |
| | 4 | 8 | 12 | 16 | 20 |
| 17 | 11,8 | 14,1 | 22,4 | 62,3 | nicht nachweisbar |
| 18 | 12,5 | 15,1 | 25,2 | 49,8 | 91,0 |
| 19 | 12,4 | 13,5 | 24,8 | 58,6 | 92,7 |
| 20 | 17,2 | 21,4 | 23,5 | 33,29 | 43,4 |

### Beispiele 21 - 28

Die im folgenden angegebenen Beispiele belegen die Wirkung der Zusätze der beanspruchten Carbonsäuren. Dazu wurde folgende Grundmischung hergestellt:

Jeweils 1000 g eines Stärkeacetates (DS = 2,3) wurden in einem Mischer mit 200 g Polyethylenglykol (M = 400) und dem jeweiligen Zusatz vorgemischt und anschließend mit Hilfe eines Zweischneckenextruders granuliert. Am Extruder waren folgende Temperaturen eingestellt:

**Tabelle 8**

| **Einstellung der Temperaturen am Extruder** | |
|---|---|
| Temperaturzone 1 | 140 °C |
| Temperaturzone 2 | 150 °C |
| Temperaturzone 3 | 160 °C |
| Temperaturzone 4 | 160 °C |
| Temperaturzone 5 | 145 °C |

Die jeweiligen Zusätze sind folgender Tabelle zu entnehmen:

**Tabelle 9**

| **Zusätze zur o. g. Grundmischung** | | | | |
|---|---|---|---|---|
| Beispiel | Zusatz | Menge | Säurezahl (mg KOH/g) | Bemerkung |
| 21 (Vergleich) | - | - | 2 | |
| 22 (erfindungsg.) | Oxalsäure | 10 g | 27 | |
| 23 (Vergleich) | Oxalsäure | 30 g | - | nicht verarbeitbar |
| 24 (erfindungsg.) | Oxalsäure | 2 g | 10 | |
| 25 (") | Maleinsäure | 11,5 g | 19 | |
| 26 (") | Adipinsäure | 10 g | 16 | |
| 27 (") | Weinsäure | 10 g | 24 | |
| 28 (") | Zitronensäure | 12 g | 20 | |

Die anfallenden Granulate wurden zu ISO-Stäbchen (80 mm x 10 mm x 4 mm) bzw. zu Preßplatten (10 cm x 10 cm x 0,1 cm) verarbeitet. Beispiel 23 ließ sich nicht zu Granulat 20 verarbeiten und konnte für die weiteren Untersuchungen folglich nicht verwendet werden. Anhand der Preßplatten wurde der Farbort der Compounds bestimmt. Der Farbort wurde nach DIN 5033 bestimmt. Die Angabe der Werte erfolgt in CIELAB-Koordinaten.

**Tabelle 10**

| **Farbort der untersuchten Compounds** | | | |
|---|---|---|---|
| Beispiel | Helligkeit L* | Farbkoordination | |
| | | a* | b* |
| 21 | 54,1 | 8,60 | 33,5 |
| 22 | 93,1 | - 0,72 | 8,62 |
| 24 | 82,5 | 3,80 | 25,05 |
| 25 | 87,9 | 1,09 | 18,71 |
| 26 | 93,2 | - 0,05 | 8,10 |
| 27 | 92,5 | - 0,59 | 8,66 |
| 28 | 90,8 | 0,20 | 10,71 |

| | | | |
|---|---|---|---|
| - a */+ a * - grün/rot - Achse | | | |
| - b */+ b * - blau/gelb - Achse | | | |

Deutlich ist zu erkennen, daß die erfindungsgemäßen Zusätze die Helligkeit erhöhen und die Eigenfärbung der Produkte deutlich verringern. Die hergestellten Granulate sind hell und klar mit einem gelblichen Schimmer, während die Vergleichsmuster eine sehr starke Braunfärbung aufweisen.

Eine Auflistung charakteristischer mechanischer Kennwerte (Tabelle 11) zeigt, daß die erfindungsgemäßen Zusätze keine wesentlichen Änderungen bewirken.

**Tabelle 11**

| **Ausgewählte mechanische Kennwerte, gemessen an ISO-Stäben (80 mm x 10 mm x 4 mm)** | | | | | | | | |
|---|---|---|---|---|---|---|---|---|
| Beispiel | 21 | 22 | 23 | 24 | 25 | 26 | 27 | 28 |
| Schlagbiegefestigkeit (kg/m²) | 5,8 | 7,5 | 6,0 | 7,0 | 8,6 | 7,6 | 8,8 | 7,7 |
| Grenzfestigkeit (N/mm²) | 40,8 | 37,2 | 40,3 | 42,4 | 36,5 | 45,7 | 46,8 | 44,2 |
| E-Modul (N/mm²) | 1220 | 1311 | 1210 | 1385 | 1166 | 1455 | 1500 | 1392 |
| Zugfestigkeit (N/mm²) | 29,5 | 26,2 | 28,8 | 28,7 | 20,1 | 30,5 | 31,0 | 25,2 |
| Kugeldruckstärke 30" (N/mm²) | 63 | 55 | 61 | 63 | 53 | 65 | 68 | 65 |

Das Beispiel 26 a entspricht dem Beispiel 26, die ISO-Stäbe wurden jedoch 6 Monate bei Raumtemperatur gelagert. Dieses Beispiel veranschaulicht, daß die Gebrauchswerteigenschaften sich bei Zusatz der angegebenen Mengen auch bei längerer Lagerung nicht verschlechtern. Die zwischen den einzelnen Beispielen erkennbaren Differenzen können bei bestimmten Anwendungsfällen als zusätzlicher Vorteil genutzt werden, wie beispielsweise die deutliche Erhöhung des E-Moduls bei Beispiel 27 und 28 gegenüber der Ausgangsmischung in Beispiel 21.

An den Compounds der Beispiele 22 bis 28 konnten mit Hilfe einer Schmelzspinnvorrichtung Monofilamente mit einer für eine Weiterverarbeitung ausreichenden Qualität hergestellt werden. Die Wirkung der erfindungsgemäßen Zusätze auf den biologischen Abbau wurden geprüft, indem die oben beschriebenen ISO-Stäbe in eine industrielle Kompostieranlage gegeben wurden.

Die Verrottung des Materials in dieser Kompostieranlage erfolgte in 2 Stufen:

| | |
|---|---|
| 1. Intensivrotte | 2 Wochen, Container, 70 °C |
| 2. Nachrotte | 20 Wochen, Miete, ohne Temperaturführung |

Die Ergebnisse der Rotteversuche sind in folgender Tabelle zusammengefaßt:

**Tabelle 12**

| **Ergebnisse der Rotteversuche** | | | | | |
|---|---|---|---|---|---|
| Beispiel | Masseverlust der ISO-Stäbe nach Wochen (Ma %) | | | | |
| | 4 | 8 | 12 | 16 | 20 |
| 21 | 12,4 | 13,5 | 24,8 | 58,6 | 92,7 |
| 22 | 15,6 | 48,3 | 87,4 | nicht mehr nachweisbar | |
| 24 | 12,3 | 15,8 | 45,8 | 88,4 | nicht mehr nachweisbar |
| 25 | 17,8 | 64,2 | 90,4 | | " |
| 26 | 14,3 | 36,5 | 82,2 | | " |
| 27 | 13,5 | 28,4 | 69,9 | | " |
| 28 | 13,0 | 15,4 | 39,3 | 75,3 | nicht mehr nachweisbar |

Eine deutliche Verbesserung der Verrottbarkeit der Compounds mit erfindungsgemäßem Zusatz gegenüber dem Vergleich (Bsp. 21) ist erkennbar.

## Patentansprüche

1. Bioabbaubare, thermoplastisch verformbare Materialien aus Stärkeestern und Weichmachern, dadurch gekennzeichnet, daß sie aus Blends von Stärkeestern auf der Basis von Stärke mit einem Amylopektingehalt von 20 bis 80 Masse-%, sowie mit einem Substitutionsgrad < 3 mit Polyalkylenglykolen oder Gemischen verschiedener Polyalkylenglykole mit Molmassen von 200 - 2000 g/mol in einem Mischungsverhältnis Stärkeester/Polyalkylenglykol von 10 zu 1 bis 10 zu 5 Masseteile bestehen, wobei gegebenenfalls 20 bis 80 % der Polyalkylenglykole durch eine Polyhydroxybuttersäure mit einer Molmasse von 1000 bis 10 000 g/mol ersetzt sind und/oder die Blends eine aliphatische gesättigte oder ungesättigte Dicarbonsäure und/oder eine Oxidicarbonsäure und/oder eine Oxitricarbonsäure mit 2 bis 10 C-Atomen in einem Mischungsverhälthis Blend/Säure 100 zu 1 bis 1000 zu 1 enthalten.

2. Materialien gemäß Anspruch 1, dadurch gekennzeichnet, daß sie Stärkeester mit einem Substitutionsgrad von 1,8 -2,6 enthalten.

3. Materialien gemäß Anspruch 1 und 2, dadurch gekennzeichnet, daß sie Polyalkylenglykole oder Gemische von Polyalkylenglykolen oder Alkylenglykol-Copolymere mit Molmassen von 200 - 600 g/mol enthalten.

4. Materialien gemäß Anspruch 1 bis 3, dadurch gekennzeichnet, daß sie Stärkeester in Form von Stärkeacetaten enthalten.

5. Materialien gemäß Anspruch 1 bis 3, dadurch gekennzeichnet, daß sie Stärkemischester enthalten, die Acetoxy- und/oder Propoxy-und/oder Butyroxy- und/oder β-Hydroxybutyroxy-Substituenten tragen.

6. Materialien gemäß Anspruch 1 bis 5, dadurch gekennzeichnet, daß die verwendeten Polyalkylenglykole Polyethylenglykole und/oder Polypropylenglykole und/oder Copolymere des Ethylenoxids und Propylenoxids sind.

7. Materialien gemäß Anspruch 1 bis 6, dadurch gekennzeichnet, daß sie Kunststoffhilfsstoffe in homogen verteilter Form enthalten.

8. Bioabbaubare, thermoplastisch verformbare Materialien nach Anspruch 1, dadurch gekennzeichnet, daß die Polyhydroxybuttersäure eine Molmasse von 2000 bis 5000 g/mol aufweist.

9. Bioabbaubare, thermoplastisch verformbare Materialien nach den Ansprüchen 1 und 8, dadurch gekennzeichnet, daß eine ataktische Polyhydroxybuttersäure eingesetzt ist.

10. Bioabbaubare thermoplastisch verformbare Materialien nach Anspruch 1, dadurch gekennzeichnet, daß die Stärkeestercompounds aliphatische gesättigte oder ungesättigte alpha-, omega-Dicarbonsäuren mit 2 bis 10 C-Atomen enthalten.

11. Bioabbaubare thermoplastisch verformbare Materialien nach Anspruch 1 und 10, dadurch gekennzeichnet, daß Oxalsäure, Malonsäure, Bernsteinsäure, Glutarsäure und/oder Adipinsäure enthalten sind.

12. Bioabbaubare thermoplastisch verformbare Materialien nach Anspruch 1, dadurch gekennzeichnet, daß die Stärkeestercompounds aliphatische Oxidicarbonsäuren mit 2 bis 10 C-Atomen und 1 bis 2 OH-Gruppen im Molekül enthalten.

13. Bioabbaubare thermoplastisch verformbare Materialien nach Anspruch 1 und 12, dadurch gekennzeichnet, daß Äpfelsäure und/oder Weinsäure enthalten sind.

14. Bioabbaubare thermoplastisch verformbare Materialien nach Anspruch 1 und 10, dadurch gekennzeichnet, daß Maleinsäure und/oder Fumarsäure enthalten sind.

15. Bioabbaubare thermoplastisch verformbare Materialien nach Anspruch 1, dadurch gekennzeichnet, daß die Stärkeestercompounds aliphatische Oxitricarbonsäuren mit 2 bis 10 C-Atomen und 1 bis 2 OH-Gruppen im Molekül enthalten.

16. Bioabbaubare thermoplastisch verformbare Materialien nach Anspruch 1 und 15, dadurch gekennzeichnet, daß Zitronensäure enthalten ist.

17. Bioabbaubare thermoplastisch verformbare Materialien 1 und nach Anspruch 10, dadurch gekennzeichnet, daß die Dicarbonsäure, Oxidicarbonsäure und/oder Oxitricarbonsäure in einem Mischungsverhältnis Blend/Säure 100 zu 1 bis 300 zu 1 enthalten ist.

18. Bioabbaubare thermoplastisch verformbare Materialien nach Anspruch 1 und 10 bis 17, dadurch gekennzeichnet, daß nach der Einarbeitung der Carbonsäuren die Säurezahl der fertigen Compounds zwischen 10 und 25 mg KOH/g liegt.

## Claims

1. Biodegradable thermoplastically workable materials made of starch esters and plasticizers, whereby these consist of blends of starch esters based on starch with an amylopectin content of 20 to 80 percent by weight and with a degree of substitution of < 3 with polyalkylene glycols or of mixtures of different polyalkylene glycols with a molar mass of 200 to 2,000 g/mole in a mixing ratio starch ester : polyalkylene glycol of 10 to I through 10 to 5 parts by weight and whereby 20% to 80% of the polyalkylene glycols may be substituted by a polyhydroxy butyric acid with a molar weight of 1,000 to 10,000 g/mole and/or whereby the blends may contain an aliphatic saturated or unsaturated dicarboxylic acid and/or an oxydicarboxylic acid and/or an oxytricarboxylic acid with 2 to 10 C atoms in a mixing ratio blend to acid of 100 to 1 through 1,000 to 1.

2. Materials according to claim 1 above, whereby these contain starch esters with a degree of substitution from 1.8 to 2.5.

3. Materials according to claims 1 and 2 above, whereby these contain polyalklyene glycols or mixtures of polyalkylene glycols or alkylene glycol copolymers with a molar mass of 200 to 600 g/mole.

4. Materials according to claims 1 through 3 above, whereby these contain starch esters in the form of starch acetates.

5. Materials according to claims 1 through 3 above, whereby these contain mixed starch esters which carry acetoxy and/or propoxy and/or butyroxy and/or β-hydroxybutyroxy substituents.

6. Materials according to claims 1 through 5 above, whereby the polyalkylene glycols are polyethylene glycols and/or polypropylene glycols and/or copolymers of ethylene oxide and propylene oxide.

7. Materials according to claims 1 through 6 above, whereby these contain plastic auxiliary agents in a homogenously distributed form.

8. Biodegradable thermoplastically workable materials according to claim 1 above, whereby the polyhydroxy butyric acid has a molar weight of 2,000 to 5,000 g/mole.

9. Biodegradable thermoplastically workable materials according to claims 1 and 8 whereby an atactic polyhydroxy butyric acid is used.

10. Biodegradable thermoplastically workable materials according to claim 1 above, whereby the starch ester compounds contain aliphatic saturated or unsaturated alpha omega dicarboxylic acids with 2 to 10 C atoms.

11. Biodegradable thermoplastically workable materials according to claims 1 and 10 above, whereby these contain oxalic acid, malonic acid, succinic acid, glutaric acid and/or adipic acid.

12. Biodegradable thermoplastically workable materials according to claim 1 above, whereby the starch ester compounds contain aliphatic oxydicarboxylic acids with 2 to 10 C atoms and with 1 to 2 OH groups in the molecule.

13. Biodegradable thermoplastically workable materials according to claims 1 and 12 above, whereby these contain malic acid and/or tartaric acid.

14. Biodegradable thermoplastically workable materials according to claims 1 and 10 above, whereby these contain maleic acid and/or fumaric acid.

15. Biodegradable thermoplastically workable materials according to claim 1 above, whereby the starch ester compounds contain aliphatic oxytricarbocxylic acids with 2 to 10 C atoms and with 1 to 2 OH groups in the molecule.

16. Biodegradable thermoplastically workable materials according to claims 1 and 15 above, whereby these contain citric acid.

17. Biodegradable thermoplastically workable materials according to claims 1 and 10 above, whereby the dicarboxylic acid, the oxydicarboxylic acid and/or the oxytricarboxylic acid are contained in a mixing ratio blend-to-acid of 100 to 1 to 300 to 1.

18. Biodegradable thermoplastically workable materials according to claims 1, and 10 through 17 above, whereby the acid number of the ready compound after integration of the carboxylic acid is between 10 and 25 mg KOH/g.

## Revendications

1. Matériaux thermoplastiques déformables biodégradables à partir d'esters d'amidon et de plastifiants caractérisés par le fait qu'ils sont constitués de blends d'esters d'amidon à la base d'amidon ayant une teneur d'amylopectine de 20 à 80 % en poids, et un degré de substitution < 3 avec les glycols de polyalkylène ou des mélanges de divers glycols de polyalkylène aux masses moléculaires de 200 à 2000 g/mol dans un rapport de mélange d'ester d'amidon par rapport au glycol de polyalkylène de 10 : 1 à 10 : 5 en parts de poids, tout en sachant qu'éventuellement 20 à 80 % des glycols de polyalkylène seront remplacés par un acide polyhydroxybutyrique d'un poids moléculaire de 1000 à 10 000 g/mol et/ou que les blends pourront contenir un acide dicarbonique et/ ou oxydicarbonique et/ ou oxytricarbonique aliphatique saturé ou non saturé avec 2 à 10 atomes de C dans un rapport de mélange de blend par rapport à l'acide de 100 : 1 jusqu'à 1000 : 1.

2. Matériaux selon la revendication 1, caractérisés par le fait qu'ils contiennent de l'ester d'amidon avec un degré de substitution se situant entre 1,8 et 2,6.

3. Matériaux selon les revendications 1 et 2, caractérisés par le fait qu'ils contiennent des glycols de polyalkylène, des mélanges de glycols de polyalkylène, ou des copolymères de glycol d'alkylène avec des poids moléculaires de 200 à 600 g/mol.

4. Matériaux selon les revendications 1 à 3, caractérisés par le fait qu'ils contiennent de l'ester d'amidon sous forme d'acétates d'amidon.

5. Matériaux selon les revendications 1 à 3, caractérisés par le fait qu'ils contiennent des mélanges d'esters d'amidon qui portent des substituants acétoxy, et/ou propoxy et/ou butyroxy et/ou β-hydroxybutyroxy.

6. Matériaux selon les revendications 1 à 5, caractérisés par le fait que les glycols de polyalkylène utilisés sont des glycols de polyéthylène et/ou des glycols de polypropylène et/ ou des copolymères d'oxyde d'éthylène et de propylène.

7. Matériaux selon les revendications 1 à 6, caractérisés par le fait qu'ils contiennent des additifs plastiques de forme répartie de manière homogène.

8. Matériaux thermoplastiques déformables biodégradables selon la revendication 1, caractérisés par le fait que l'acide polyhydroxybutyrique présente un poids moléculaire de 2000 jusqu'à 5000 g/mol.

9. Matériaux thermoplastiques déformables biodégradables selon les revendications 1 et 8, caractérisés par le fait qu'est appliqué un acide polyhydroxybutyrique atactique.

10. Matériaux thermoplastiques déformables biodégradables selon la revendication 1, caractérisés par le fait que les compouds d'ester d'amidon contiennent des acides dicarboniques alpha et oméga aliphatiques saturés ou non saturés avec 2 à 10 atomes de C.

11. Matériaux thermoplastiques déformables biodégradables selon les revendications 1 et 10, caractérisés par le fait qu'ils contiennent de l'acide oxalique, de l'acide malonique, de l'acide succinique, de l'acide glutarique et/ou de l'acide adipique.

12. Matériaux thermoplastiques déformables biodégradables selon la revendication 1, caractérisés par le fait que les compounds d'ester d'amidon contiennent des acides oxydicarboniques aliphatiques avec 2 à 10 atomes de C et 1 à 2 groupes OH dans la molécule.

13. Matériaux thermoplastiques déformables biodégradables selon les revendications 1 et 12, caractérisés par le fait qu'ils contiennent de l'acide malique et/ ou de l'acide tartrique.

14. Matériaux thermoplastiques déformables biodégradables selon les revendications 1 et 10, caractérisés par le fait qu'ils contiennent de l'acide maléique et/ou de l'acide fumarique.

15. Matériaux thermoplastiques déformables biodégradables selon la revendication 1, caractérisés par le fait que les compouds d'ester d'amidon contiennent des acides oxytricarboniques aliphatiques avec 2 à 10 atomes de C et 1 à 2 groupes OH dans la molécule.

16. Matériaux thermoplastiques déformables biodégradables selon les revendications 1 et 15, caractérisés par le fait qu'ils contiennent de l'acide citrique.

17. Matériaux thermoplastiques déformables biodégradables selon les revendications 1 et 10, caractérisés par le fait qu'ils contiennent de l'acide dicarbonique, de l'acide oxydicarbonique et/ou de l'acide oxytricarbonique dans un rapport de mélange blend / acides de 100 : 1 jusqu'à 300 : 1.

18. Matériaux thermoplastiques déformables biodégradables selon les revendications 1 et 10 jusqu'à 17, caractérisés par le fait qu'après l'insertion des acides carboniques, l'indice d'acidité du compound achevé se situe entre 10 et 25 mg de KOH/g.
